# EUROPÄISCHE PATENTSCHRIFT

(11) **EP 1 640 801 B1**
(45) Veröffentlichungstag und Bekanntmachung des Hinweises auf die Patenterteilung: **20.08.2008**
(21) Anmeldenummer: 04104603.8
(22) Anmeldetag: 22.09.2004
(51) Int. Cl.: G03B 42/02, G03B 42/04, H04N 1/00

(54) **Vorrichtung und Verfahren zum Auslesen von in einer Speicherleuchtstoffplatte gespeicherten Röntgeninformationen**
Device for and method of reading x-ray information stored in a storage phosphor plate
Dispositif et procédé de lecture d'information radiographique stockée dans une plaque à mémoire au phosphore

(43) Veröffentlichungstag der Anmeldung: 29.03.2006
(73) Patentinhaber: Agfa-Gevaert HealthCare GmbH, 51373 Leverkusen (DE)
(72) Erfinder: Labarte, Didier, 81539 München (DE); Schwelle, Peter, 82362 Weilheim (DE); Klabunde, Olaf, 89537 Giengen/Brenz (DE); Hölzl, Johannes, 85630 Grasbrunn (DE); Schindlbeck, Günther, 81545 München (DE); Kieselbach, Edwin, 85077 Maching (DE); Werkstetter, Rudolf, 84567 Perach (DE); Dier, Andreas, 81539 München (DE); Müller, Roland, 81541 München (DE); Voigtländer, Volkmar, 82223 Eichenau (DE); Stahl, Werner, 85551 Heimstetten (DE)

(56) Entgegenhaltungen:
- EP-A- 1 014 684
- EP-A- 1 209 517
- US-A- 5 340 995
- US-B1- 6 346 714

## Beschreibung

Die Erfindung betrifft eine Vorrichtung sowie ein entsprechendes Verfahren zum Auslesen von in einer Speicherleuchtstoffplatte gespeicherten Röntgeninformationen gemäß dem Oberbegriff von Anspruch 1 bzw. 10.

Gattungsgemäße Vorrichtungen im Verfahren werden, insbesondere für medizinische Zwecke, im Bereich der Computer-Radiographie (CR) eingesetzt. Hierbei werden Röntgenaufnahmen in sogenannten Speicherleuchtstoffen aufgezeichnet, indem die durch ein Objekt, beispielsweise einen Patienten, hindurchtretende Röntgenstrahlung als latentes Bild in einer Speicherleuchtstoffschicht gespeichert wird. Zum Auslesen des gespeicherten Bildes wird die Speicherleuchtstoffschicht mit Stimulationslicht bestrahlt und dabei zur Aussendung von Emissionslicht angeregt, dessen Intensität von der jeweils gespeicherten Bildinformation abhängt. Das Emissionslicht wird von einem optischen Detektor erfasst und in elektrische Signale umgewandelt, welche nach Bedarf weiter verarbeitet und auf einem Monitor dargestellt oder an einem entsprechenden Ausgabegerät, wie z.B. einem Drucker, ausgegeben werden können.

Das Patent US 6,437,359 beschreibt eine Vorrichtung, bei welcher eine in einer Kassette befindliche Speicherleuchtstoffplatte mittels einer Auszugsstange aus der Kassette entnommen und in vertikaler Richtung an einer Auslesestation vorbei transportiert wird. Zur Führung der Speicherleuchtstoffplatte sind Plattenführungen sowie Führungsrollen vorgesehen. Damit die Speicherleuchtstoffplatte während des Transports an den Plattenführungen bzw. Führungsrollen anliegt, wird die Auszugsstange leicht gedreht, wodurch die Speicherleuchtstoffplatte gegen die Plattenführungen bzw. Führungsrollen gedrückt wird. Ein solcher Mechanismus zum Drehen der Auszugsstange ist relativ aufwändig und störanfällig.

Aus US 5,340,995 ist eine Vorrichtung bekannt, bei der die Speicherleuchtstoffplatte in einer gegen die Vertikale geneigten Orientierung gehalten bzw. transportiert wird. EP 1 209 517 A2 beschreibt eine Vorrichtung, bei welcher die Speicherleuchtstoffplatte mittels magnetischer Kräfte von einer vertikal orientierten Auflage angezogen wird.

Es ist Aufgabe der Erfindung, eine Vorrichtung sowie ein entsprechendes Verfahren zum Auslesen von Speicherleuchtstoffplatten mit einer vereinfachten und robusten Führung oder Halterung der Speicherleuchtstoffplatten bei gleichzeitig hoher Kompaktheit anzugeben, wobei gleichzeitig auf einfache Weise eine an das jeweilige Format der Speicherleuchtstoffplatte angepasste Führung bzw. Halterung gewährleistet werden soll.

Diese Aufgabe wird durch die Vorrichtung oder das Verfahren nach Anspruch 1 bzw. 8 gelöst.

Die erfindungsgemäße Vorrichtung gemäß Anspruch 1 umfasst eine Einrichtung zum Halten und/oder Transportieren der Speicherleuchtstoffplatte in einer um einen geringfügigen Neigungswinkel, vorzugsweise zwischen etwa 3° und 15°, gegen die Vertikale geneigten Orientierung, in welcher die Speicherleuchtstoffplatte eine ebene Form aufweist, und eine Ausleseeinrichtung zum Auslesen der um den Neigungswinkel gegen die Vertikale geneigten, ebenen Speicherleuchtstoffplatte.

Bei dem erfindungsgemäßen Verfahren gemäß Anspruch 8 wird die Speicherleuchtstoffplatte ausgelesen, während sie um einen geringfügigen Neigungswinkel, vorzugsweise zwischen etwa 3° und 15°, gegen die Vertikale geneigt ist und eine ebene Form aufweist.

Durch die erfindungsgemäße Neigung der Speicherleuchtstoffplatte gegen die Vertikale wird erreicht, dass diese aufgrund ihres Eigengewichts gegen entsprechende Auflage- und/oder Führungselemente gedrückt wird und auf diesen aufliegen kann, ohne dass hierfür ein zusätzlicher Andrückmechanismus erforderlich wäre. Der für das sichere Transportieren und/oder Halten der Speicherleuchtstoffplatte erforderliche Mechanismus wird hierdurch vereinfacht. Da die Speicherleuchtstoffplatte im Allgemeinen nur geringfügig, d.h. um wenige Grade, gegen die Vertikale geneigt sein muss, um die Vorteile der Erfindung zu erzielen, ist gleichzeitig eine hohe Kompaktheit der erfindungsgemäßen Vorrichtung gegenüber bekannten Vorrichtungen, bei denen Speicherleuchtstoffplatten in horizontaler Orientierung ausgelesen werden, gewährleistet.

Die Einrichtung zum Halten und/oder Transportieren der Speicherleuchtstoffplatte umfasst eine gegen die Vertikale geneigte ebene Auflage, auf welcher die Speicherleuchtstoffplatte, insbesondere während des Auslesens und/oder beim Transport, aufliegen kann. Hierdurch wird auf einfache Weise gewährleistet, dass die Speicherleuchtstoffplatte, insbesondere während des Auslesens und/oder beim Transport, eine ebene Form beibehält, so dass die mechanische Beanspruchung der Speicherleuchtstoffplatte auf ein Minimum reduziert wird.

Die Auflage ist mit einer Anziehungsanrichtung versehen, durch welche die Speicherleuchtstoffplatte an die Auflage gezogen werden kann. Die Speicherleuchtstoffplatte wird somit durch ihr Eigengewicht und zusätzlich durch die Anziehungseinrichtung an der Auflage gehalten, so dass die gegen die Vertikale geneigte Orientierung der Speicherleuchtstoffplatte mit besonders hoher Sicherheit gewährleistet wird. Die Anziehungseinrichtung kann beispielsweise Ansaugdüsen umfassen, welche mit einer Vakuumpumpe verbunden sind. Die Speicherleuchtstoffplatte wird hierbei durch Ansaugen an die Auflage gezogen. Alternativ können aber auch Magnete vorgesehen sein, durch welche eine mit entsprechenden magnetischen Substanzen versehene Speicherleuchtstoffplatte von der Auflage angezogen werden kann.

Erfindungsgemäß weist die Auflage mehrere Segmente auf, durch welche die auf der Auflage befindliche Speicherleuchtstoffplatte an die Auflage gezogen werden kann. Die Anziehungswirkung der Segmente ist einzeln ansteuerbar, wodurch auf einfache Weise eine an das jeweilige Format der Speicherleuchtstoffplatte 3 a-daptierbare Anziehung an die Auflage realisiert wird.

Vorzugsweise umfasst die Einrichtung zum Halten und/oder Transportieren der Speicherleuchtstoffplatte ein oder mehrere Auflageelemente, welche derart angeordnet sind, dass die gegen die Vertikale geneigte Speicherleuchtstoffplatte aufgrund ihres Eigengewichts auf den Auflageelementen aufliegen kann.

Bei den Auflageelementen kann es sich unter anderem um Führungselemente handeln, wie beispielsweise Führungskufen oder Führungsrollen, welche die Speicherleuchtstoffplatte während ihres Transports führen.

Bei einer weiteren Ausführungsform der Erfindung ist eine erste Antriebseinrichtung vorgesehen, welche die Ausleseeinrichtung während des Auslesens relativ zu der gegen die Vertikale geneigten Speicherleuchtstoffplatte bewegt. Letztere liegt hierbei vorzugsweise auf der ebenen Auflage. Insbesondere bei Verwendung von sogenannten Zeilenscannem, bei welchen durch die Ausleseeinrichtung jeweils eine ganze Zeile der auszulesenden Speicherleuchtstoffplatte zu einem Zeitpunkt ausgelesen wird, wird hierdurch ein besonders kompakter Aufbau der Vorrichtung erreicht.

In einer alternativen Ausgestaltung der Erfindung ist eine zweite Antriebsvorrichtung vorgesehen, welche die gegen die Vertikale geneigte Speicherleuchtstoffplatte, insbesondere zusammen mit der ebenen Auflage, während des Auslesens relativ zu der Ausleseeinrichtung bewegt. Diese Ausgestaltung ist von besonderem Vorteil, wenn die Ausleseeinrichtung einen sogenannten Flying Spot-Scanner umfasst, bei welchem ein einzelner Laserstrahl mittels eines rotierenden Spiegels abgelenkt wird und dabei punktweise einzelne Zeilen der auszulesenden Speicherleuchtstoffplatte abtastet. Da solche Scanner aufgrund ihres Aufbaus im Allgemeinen empfindlicher auf Erschütterungen reagieren, werden diese häufig ortsfest in den jeweiligen Auslesevorrichtungen integriert.

Es ist außerdem bevorzugt, eine Eingabeeinrichtung vorzusehen, in welcher eine Kassette, in der sich die Speicherleuchtstoffplatte befindet, eingegeben werden kann, wobei die Eingabeeinrichtung derart ausgestaltet ist, dass die eingegebene Kassette und/oder die in der Kassette befindliche Speicherleuchtstoffplatte gegen die Vertikale geneigt ist. Hierdurch wird sichergestellt, dass die in der Kassette befindliche Speicherleuchtstoffplatte bei ihrer Entnahme aus der Kassette aufgrund ihres Eigengewichts auf einer inneren Breitseite der Kassette aufliegen und von dieser geführt werden kann. Hierdurch kann bei der Entnahme der Speicherleuchtstoffplatte aus der Kassette auf zusätzliche Führungselemente verzichtet werden.

Der Transport der Speicherleuchtstoffplatte in der erfindungsgemäßen Vorrichtung erfolgt vorzugsweise in einer ebenfalls gegen die Vertikale geneigten Transportebene. Hierdurch ist sichergestellt, dass die ebene Speicherleuchtstoffplatte während ihres Transports nicht gebogen oder geknickt wird, so dass die mechanische Beanspruchung der Speicherleuchtstoffplatte während ihres Transports stark vermindert wird. Vorzugsweise liegt die in der Kassette befindliche Speicherleuchtstoffplatte in der Transportebene, so dass die Speicherleuchtstoffplatte bei ihrer Entnahme aus der Kassette und ihrem Transport in der Transportebene nicht gebogen wird.

Erfindungsgemäß weist der Neigungswinkel der Speicherleuchtstoffplatte und/oder der Auflage und/oder der Transportebene und/oder der eingegebenen Kassette bzw. der in der Kassette befindlichen Speicherleuchtstoffplatte einen Wert zwischen 3° und 15° auf. Hierdurch wird bei hoher Kompaktheit eine hohe Zuverlässigkeit während des Auslesens bzw. Transports der Speicherleuchtstoffplatte gewährleistet.

Weitere Merkmale und Vorteile der Erfindung ergeben sich aus der folgenden Beschreibung bevorzugter Ausführungsformen und Anwendungsbeispiele, wobei Bezug auf die beigefügten Zeichnungen genommen wird.

Es zeigen:
- Fig. 1: a) eine stark schematisierte Darstellung der erfindungsgemäßen Vorrichtung zu einem ersten Zeitpunkt in Vorderansicht und b) in Seitenansicht;
- Fig. 2: a) die in Fig. 1 dargestellte Vorrichtung zu einem zweiten Zeitpunkt in Vorderansicht und b) in Seitenansicht;
- Fig. 3: einen Querschnitt durch die Eingabeeinrichtung im Bereich des Anschlags in Vorderansicht;
- Fig. 4: einen Querschnitt durch die Eingabeeinrichtung mit der darin befindlichen Kassette in Seitenansicht;
- Fig. 5: einen Querschnitt durch die Eingabeeinrichtung im Bereich des Fixierelements und des Verschlusses in Vorderansicht;
- Fig. 6: einen Querschnitt durch die Eingabeeinrichtung im Bereich des Fixierelements und des Verschlusses in Draufsicht;
- Fig. 7: eine bevorzugte Ausführungsform der Auflage;
- Fig. 8: a) bis c) eine weitere Ausführungsform der erfindungsgemäßen Vorrichtung in Seitenansicht zu einem ersten, zweiten bzw. dritten Zeitpunkt.

Die Erfindung wird anhand des nachfolgend beschriebenen Gesamtablaufs beim Auslesen von Speicherleuchtstoffplatten näher erläutert.

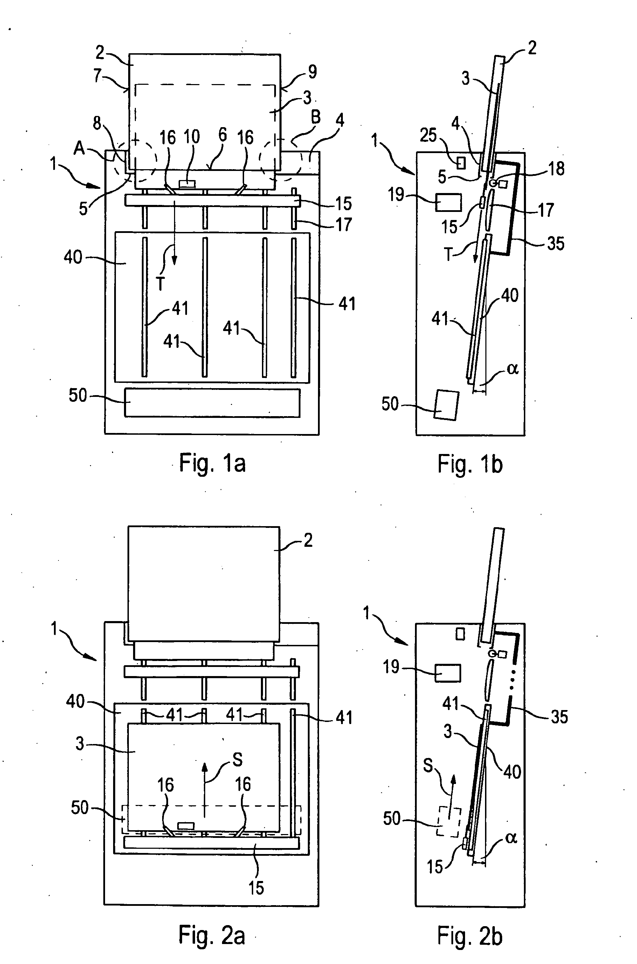

Die Figuren 1a und 1b zeigen ein Beispiel der erfindungsgemäßen Vorrichtung 1 in Vorder- bzw. Seitenansicht. Im oberen Bereich des Gehäuses der Vorrichtung 1 befindet sich eine Eingabeeinrichtung, welche in diesem Beispiel als Kassettenaufnahmeschacht 4 ausgebildet ist. Der Kassettenaufnahmeschacht 4 ist so ausgelegt, dass eine in den Schacht eingegebene Kassette 2 zusammen mit der darin befindlichen Speicherleuchtstoffplatte 3 um einen Neigungswinkel gegen die Vertikale geneigt ist. Der Neigungswinkel liegt vorzugsweise zwischen etwa 3° und 15°.

Im unteren Bereich des Kassettenaufnahmeschachts 4 ist eine längliche Eingabeöffnung 5 vorgesehen, durch welche die in der Kassette 2 befindliche Speicherleuchtstoffplatte 3 in das Innere des Gehäuses der Vorrichtung 1 transportiert werden kann. Die Eingabeöffnung 5 ist länglich oder schlitzförmig ausgebildet, wobei deren Länge mindestens so groß wie die entsprechende Länge des größten in der Vorrichtung 1 auszulesenden Speicherleuchtstoffplattenformats. Die Breite der Eingabeöffnung 5 ist ausreichend groß gewählt, damit die Speicherleuchtstoffplatte 3 bei der Entnahme aus der Kassette 2 auch bei kleineren Lageschwankungen nicht durch die Eingabeöffnung 5 behindert wird.

Die Kassette 2 liegt mit einer ersten Schmalseite 6 auf dem Boden des Kassettenaufnahmeschachts 4 auf und liegt mit einer zweiten Schmalseite 7 an einem Anschlag 8 an, welcher an einem Ende des Kassettenaufnahmeschachts 4 vorgesehen ist.

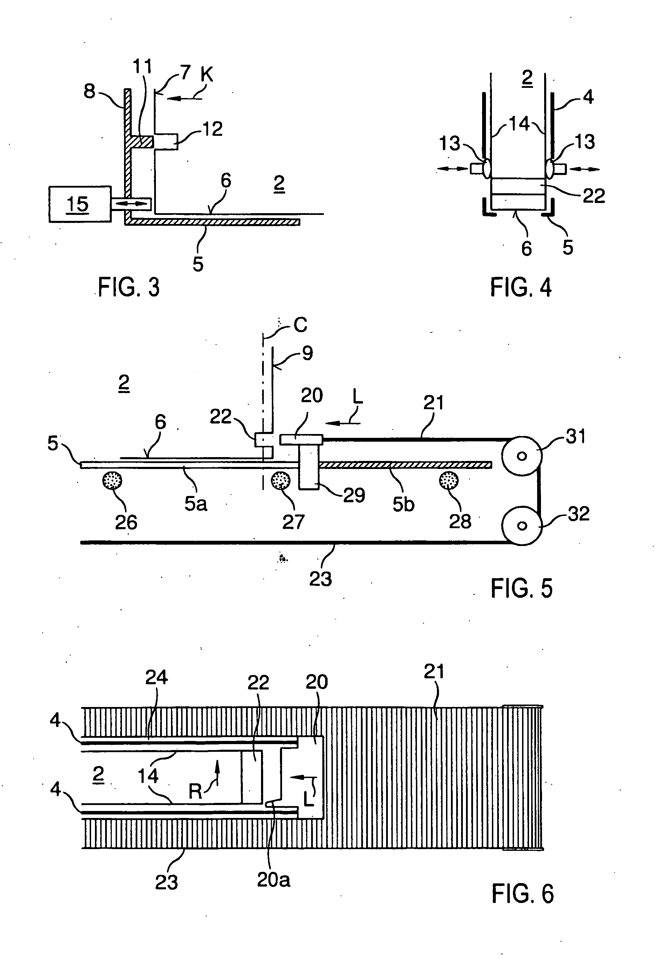

Der in Fig. 1a markierte Ausschnitt A ist in Fig. 3 vergrößert dargestellt. Am Anschlag 8 ist ein Vorsprung 11 vorgesehen, welcher in eine entsprechende, komplementäre Vertiefung 12 in der Kassette 2 eingreifen kann und diese dadurch im Kassettenaufnahmeschacht 4 fixieren kann. Während die Kassette 2 bei ihrer Eingabe in den Kassettenaufnahmeschacht 4 in Richtung K auf den Anschlag 8 geschoben wird und der Vorsprung 11 in die Vertiefung 12 der Kassette 2 eingreifen kann, wird gleichzeitig mit der unteren Ecke der Kassette 2 ein Lineartaster 15 betätigt, welcher ein der jeweiligen Position der Kassette 2 entsprechendes Signal liefert. Anhand dieses Signals kann festgestellt werden, ob die Kassette 2 bereits vollständig am Anschlag 8 anliegt.

Falls beispielsweise die Kassette 2 mit einer falschen Schmalseite in Richtung K auf den Anschlag 8 zu bewegt wird, kann der Vorsprung 11 des Anschlags 8 nicht in eine entsprechende Vertiefung der Kassette 2 eingreifen, so dass die Kassette 2 etwa auf der Höhe des Vorsprungs 11 zum Stehen kommt. In diesem Falle liefert der Lineartaster 15 kein entsprechend hohes Signal, so dass auf eine falsche Orientierung der eingegebenen Kassette 2 geschlossen werden kann. In diesem Fall wird in einer geeigneten Anzeigeeinheit an der Vorrichtung ein entsprechendes Fehlersignal ausgegeben.

Durch den Lineartaster 15 kann darüber hinaus die exakte Lage der Kassette 2 bezüglich des Anschlags 8 bzw. der Eingabeöffnung 5 überprüft werden. So kann der Lineartaster 15 auch eine leichte Verkippung der Kassette 2 gegenüber der Horizontalen erfassen.

Die Kombination des Vorsprungs 11 am Anschlag 8 und der entsprechenden Vertiefung 12 in der Kassette 2 einerseits mit dem Lineartaster 15 im Bereich des Anschlags 8 andererseits erlaubt somit auf einfache Weise eine zuverlässige Erkennung der richtigen Orientierung und exakten Lage einer eingegebenen Kassette 2. Erst wenn der Lineartaster 15 ein entsprechendes Signal liefert, werden weitere Prozessschritte bei der Bearbeitung der in der Kassette 2 befindlichen Speicherleuchtstoffplatte 3 ausgelöst.

In einem nächsten Schritt erfolgt die Fixierung der Kassette im Bereich der gegenüber der zweiten Schmalseite 7 liegenden dritten Schmalseite 9 der Kassette 2 in Verbindung mit einer Lichtabdichtung der Eingabeöffnung 5. Dies wird nachfolgend unter Bezugnahme auf die Figuren 4 bis 6 näher erläutert.

Fig. 5 zeigt den in Fig. 1a eingezeichneten Bereich B vergrößert. Ein an einem Endlosriemen 23 angebrachtes Fixierelement 20 wird in Längsrichtung L der Eingabeöffnung 5 zur dritten Schmalseite 9 der Kassette 2 hin bewegt und kann dort in eine weitere Vertiefung 22 der Kassette 2 eingreifen und die Kassette 2 dadurch formschlüssig fixieren. Durch eine entsprechende Andruckkraft wird gleichzeitig eine kraftschlüssige Fixierung der Kassette 2, insbesondere durch Andrücken an den auf der gegenüber liegenden zweiten Schmalseite 7 angeordneten Anschlag 8, erreicht.

Die Lichtabdichtung der Eingabeöffnung 5 erfolgt hierbei sowohl durch die erste Schmalseite 6 der Kassette 2, welche einen ersten Abschnitt 5a der Eingabeöffnung 5 gegen Lichteinfall abdeckt, und durch einen Verschluss 21, welcher durch einen Teil des Endlosriemens 23 gebildet wird und einen zweiten Abschnitt 5b der Eingabeöffnung 5 abdeckt.

Alternativ oder zusätzlich kann der erste Abschnitt 5a der Eingabeöffnung 5 durch andere geeignete Mittel gegen Lichteinfall abgedichtet werden. Eine mögliche Variante ist in Fig. 4 dargestellt, welche einen Querschnitt durch die Eingabeeinrichtung 4 mit der darin befindlichen Kassette 2 entlang der Querschnittsebene C (siehe Fig. 5) in Seitenansicht darstellt. In diesem Beispiel sind Dichtlippen 13 vorgesehen, welche seitlich in das Innere des Kassettenaufnahmeschachts 4 einfahren können und auf den Breitseiten 14 der Kassette 2 aufliegen können. Die Dichtlippen 13 sind in diesem Beispiel als Hohllippen ausgebildet und verlaufen vorzugsweise jeweils parallel zur Längsrichtung L (siehe Fig. 5) der Eingabeöffnung 5 bzw. der ersten Schmalseite 6 der Kassette 2.

In Fig. 4 ebenfalls zu erkennen ist die Vertiefung 22, in welche das Fixierelement 20 (siehe Fig. 5) eingreifen kann und dabei die Kassette 2 form- und ggf. kraftschlüssig fixieren kann.

Im Beispiel der Fig. 5 sind außerdem Lichtschranken 26 bis 28 vorgesehen, welche durch eine an dem Fixierelement 20 angebrachten Fahne 29 unterbrochen werden können. Die Lichtschranken 26 bis 28 sind hierbei entsprechend den unterschiedlichen zu verarbeitenden Kassettenformaten angeordnet, so dass eine Lichtschranke 26, 27 bzw. 28 nur dann von der Fahne 29 unterbrochen wird und ein entsprechendes Signal liefert, wenn eine für diese Vorrichtung zugelassene Kassette mit einem entsprechenden Format in exakter Lage und richtiger Orientierung eingegeben wird. In Verbindung mit dem im Zusammenhang mit Fig. 3 näher erläuterten Anschlag 8 wird durch die Lichtschranken 26, 27 bzw. 28 eine noch größere Zuverlässigkeit bei der Erkennung von richtiger Orientierung und exakter Lage der jeweils eingegebenen Kassette 2 gewährleistet.

Der Endlosriemen 23 ist vorzugsweise als Zahnriemen ausgebildet. Zur Führung und zum Antrieb des Endlosriemens 23 sind Rollen 31 und 32 vorgesehen, wobei eine der Rollen 31 bzw. 32 als Rollenantrieb ausgebildet ist, welcher den Endlosriemen 23 und damit den Verschluss 21 sowie das daran befestigte Fixierelement 20 parallel zur Längsrichtung L der Eingabeöffnung 5 bewegen kann.

Fig. 6 zeigt eine Draufsicht des in Fig. 5 dargestellten Ausschnitts der erfindungsgemäßen Vorrichtung. Wie zu erkennen ist, weist der Endlosriemen 23 eine Aussparung 24 im Bereich der eingegebenen Kassette 2 auf, damit dieser zu beiden Seiten der Kassette 2 verlaufen kann. An einem Ende der Aussparung 24 ist das Fixierelement 20 angebracht, welches zusammen mit dem sich daran anschließenden Verschluss 21 auf die Kassette 2 zu- bzw. von der Kassette 2 wegbewegt werden kann. Das Fixierelement 20 weist einen abgeschrägten oder keilartig verlaufenden Bereich 20a auf, durch welchen die Kassette 2 in Richtung R gegen eine Wand des Kassettenaufnahmeschachts 4 gedrückt wird, wenn das Fixierelement 20 in die Vertiefung 22 der Kassette 2 einfährt.

Das Fixierelement 20 ist vorzugsweise an einem Schlitten befestigt, der mit Rollen auf beiderseits der Kassette 2 verlaufenden Schienen verschiebbar gelagert ist (nicht dargestellt).

Am Rand der Speicherleuchtstoffplatte 3 (siehe Figur 1a) befindet sich ein elektronischer Speicher 10 zur Speicherung von Daten u. a. zum Format der Kassette 2, der Speicherleuchtstoffplatte 3 sowie der Gesamtdicke der Speicherleuchtstoffplatte 3, welche sich aus einem Substratmaterial und einer darauf befindlichen Speicherleuchtstoffschicht zusammensetzt und typischerweise eine Gesamtdicke zwischen etwa 1 und 3 mm aufweist.

Der elektronische Speicher 10 ist vorzugsweise als so genanntes RF-Tag ausgebildet, welches von einem RF-Leser 25 mittels Radiofrequenzstrahlung ausgelesen werden kann. Die aus dem elektronischen Speicher 10 ausgelesenen Daten zum Format der Kassette 2 können mit den von den Lichtschranken 26 bis 28 erhaltenen Informationen verglichen werden und auf Plausibilität geprüft werden. Befindet sich beispielsweise ein nicht erwünschter Gegenstand zwischen der dritten Schmalseite 9 der Kassette 2 und dem Fixierelement 20, wie z.B. eine Hand oder ein Finger einer Bedienperson, so ist das hierbei erhaltene Lichtschrankensignal nicht konsistent mit dem im elektronischen Speicher 10 festgelegten Kassettenformat. In diesem Falle kann der Fixiervorgang unterbrochen werden und ein entsprechendes Fehlersignal ausgegeben werden.

Am umlaufenden Endlosriemen 23 kann darüber hinaus ein sog. Klemmkraftsensor (nicht dargestellt) angeordnet sein, welcher die Spannung des Endlosriemens 23 beim Fixieren der Kassette 2 erfassen kann. Anhand der erfassten Riemenspannung kann der Antrieb des Endlosriemens 23 so gesteuert werden, dass das Fixierelement 20 mit einer vorgebbaren Kraft auf die dritte Schmalseite 9 der Kassette 2 drückt und diese dabei fixiert. Typische Kräfte liegen hierbei zwischen 10 und 100 N. Auf diese Weise wird auch bei Kassetten mit unterschiedlichem Format eine formatunabhängige Andruckkraft und Fixierung der Kassette im Kassettenaufnahmeschacht 4 erreicht. Durch eine entsprechende Vorgabe der Andruckkraft kann darüber hinaus gewährleistet werden, dass die Kassette 2 nicht durch zu hohe Kräfte bei deren Fixierung beschädigt wird. Darüber hinaus wird die Verletzungsgefahr in Fällen reduziert, in welchen versehentlich ein Körperteil, wie z.B. eine Hand oder ein Finger, einer Bedienperson zwischen Kassette 2 und Fixierelement 20 oder Anschlag 8 gerät.

An der ersten Schmalseite 6 der Kassette 2 ist eine Klappe (nicht dargestellt) vorgesehen, welche die Kassette 2 lichtdicht verschließt. Diese Klappe wird mit einem geeigneten Öffnungsmechanismus (nicht dargestellt) entriegelt, wobei gleichzeitig die Speicherleuchtstoffplatte 3 in der Kassette 2 verriegelt wird, damit diese nicht aus der Kassette 2 fallen kann. Eine solche Kassette mit einem entsprechenden Ent- bzw. Verriegelungsmechanismus wird in dem europäischen Patent mit der Veröffentlichungsnummer EP 1 531 359 näher beschrieben.

Vorzugsweise ist das Öffnen der Klappe, welches vorzugsweise durch eine einfache translatorische Bewegung von entsprechenden Öffnungsstiften im Bereich der ersten Schmalseite 6 der Kassette 2 erfolgt, mit der Abdichtung an den Breitseiten 14 der Kassette 2 durch die bereits weiter oben beschriebenen Dichtlippen 13 (siehe Fig. 4) mechanisch gekoppelt.

Eine Transporteinrichtung 15 kann nun an die Kassette 2 und die darin befindliche Speicherleuchtstoffplatte 3 heranfahren und letztere mittels Greifarmen 16 greifen. An der Speicherleuchtstoffplatte 3 sind hierbei geeignete Haken und/oder Aussparungen vorgesehen, wie sie insbesondere in den veröffentlichten europäischen Patentanmeldungen EP 1 321 804 und EP 1 324 118 näher beschrieben sind.

Die noch in der Kassette 2 verriegelte Speicherleuchtstoffplatte 3 kann nun entriegelt werden und durch eine Bewegung der Transporteinrichtung 15 in Transportrichtung T nach unten aus der Kassette 2 entnommen werden. Die Transportrichtung T schließt hierbei ebenfalls einen endlichen Neigungswinkel gegen die Vertikale ein und ist vorzugsweise so gewählt, dass die Speicherleuchtstoffplatte 3 im Wesentlichen ohne Richtungsänderung, d. h. in nur einer Transportebene, aus der Kassette entnommen und transportiert werden kann.

Die Speicherleuchtstoffplatte 3 wird nun in Transportrichtung T zu einer Auflage 40 transportiert. An der Auflage 40 sind Abstandsleisten 41 vorgesehen, welche während des Transportes der Speicherleuchtstoffplatte 3 über die Auflage 40 ausgefahren werden. Die Speicherleuchtstoffplatte 3 liegt dann aufgrund ihres Eigengewichts auf den Abstandsleisten 41 auf und wird durch diese reibungsarm geführt.

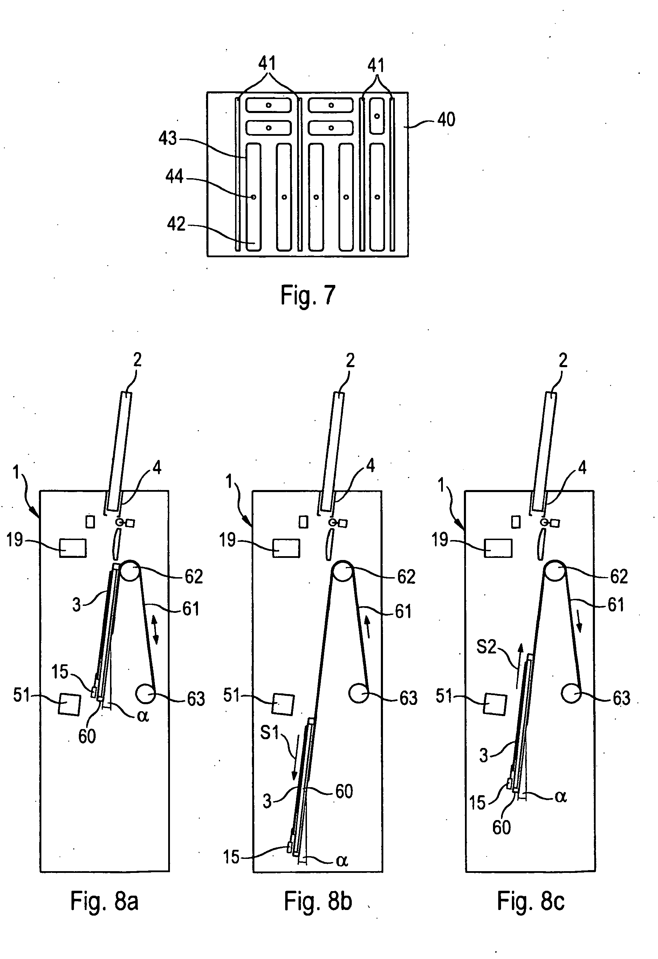

Der Aufbau einer derart ausgestalteten Auflage 40 ist in Fig. 7 im Detail dargestellt. Wie zu erkennen ist, weist die Auflage 40 neben den bereits erwähnten ein- und ausfahrbaren Abstandsleisten 41 mehrere Segmente 42 auf, durch welche die auf der Auflage 40 befindliche Speicherleuchtstoffplatte 3 an die Auflage 40 gezogen werden kann. In dem hier dargestellten Beispiel umfassen die einzelnen Segmente 42 jeweils eine Gummiumrandung 43 und eine innerhalb des jeweiligen Segments 42 angeordnete Saugdüse 44, welche mit einer Vakuumpumpe (nicht dargestellt) verbunden ist. Durch geeignete Anordnung unterschiedlich großer Segmente 42, deren Anziehungs- bzw. Ansaugwirkung vorzugsweise einzeln ansteuerbar ist, wird auf einfache Weise eine an das jeweilige Format der Speicherleuchtstoffplatte 3 adaptierbare Anziehung an die Auflage 40 realisiert.

Die Auflage 40 ist ebenfalls um einem Neigungswinkel α gegen die Vertikale geneigt.

Ist die Speicherleuchtstoffplatte 3 im Bereich der Auflage 40 angekommen, so kann Erstere aufgrund ihres Eigengewichts auf der Auflage 40 bzw. den ausgefahrenen Abstandsleisten 41 aufliegen, ohne dass weitere Führungs- oder Andrückelemente erforderlich wären. Die Abstandsleisten 41 können nun in die Auflage 40 eingefahren werden und die Speicherleuchtstoffplatte 3 nähert sich der Auflage 40 aufgrund ihres Eigengewichts weiter an und wird schließlich durch Einschalten des Vakuums an den entsprechenden Ansaugdüsen 44 der einzelnen Segmente 42 zusätzlich an die Auflage 40 angezogen.

Dieser Zustand ist in den Figuren 2a und 2b dargestellt. Bei diesem Ausführungsbeispiel ist die Transporteinrichtung 15 so konfiguriert, dass diese mit ihren Greifarmen 16 weiterhin die Speicherleuchtstoffplatte 3 hält, während diese bereits fest auf der Auflage 40 liegt. Hierdurch wird ein besonders sicherer Halt der Speicherleuchtstoffplatte 3 auf der Auflage 40 garantiert. Außerdem kann hierdurch ein erneuter Greifvorgang vor Beginn des Rücktransportes der Speicherleuchtstoffplatte 3 in die Kassette 2 unterbleiben.

Wenn die Speicherleuchtstoffplatte 3 fest auf der Auflage 40 aufliegt, fährt eine Ausleseeinrichtung 50 aus ihrer ursprünglichen Parkposition (siehe Fig. 1a und 1b ) unterhalb des unteren Endes der Auflage 40 in Richtung S auf die Speicherleuchtstoffplatte 3 nach oben. Gleichzeitig wird durch einen entsprechenden, nicht dargestellten Abstandsmechanismus, ein entsprechender Abstand zwischen der Ausleseeinrichtung 50 und der Auflage 40 eingestellt, wobei der Abstand in Abhängigkeit von der aus dem elektronischen Speicher 10 ausgelesenen Gesamtdicke der Speicherleuchtstoffplatte 3 eingestellt wird.

Die Ausleseeinrichtung 50 kann nun die in der Speicherleuchtstoffplatte 3 gespeicherten Röntgeninformationen während ihrer Bewegung in Richtung S über die Speicherleuchtstoffplatte 3 Zeile für Zeile auslesen. Bei der Ausleseeinrichtung 50 handelt es sich vorzugsweise um einen so genannten Zeilenscanner, bei welchem jeweils eine ganze Zeile der Speicherleuchtstoffplatte 3 mit Stimulationslicht angeregt wird und das dabei erzeugte Emissionslicht durch einen zeilenförmigen, ortsauflösenden Detektor erfasst wird. Ein solcher Zeilenscanner wird beispielsweise in der deutschen Offenlegungsschrift DE 197 52 925 näher beschrieben.

Nach dem Auslesen der Speicherleuchtstoffplatte 3 wird der Abstand der Ausleseeinrichtung 50 zur Auflage 40 wieder erhöht und die Ausleseeinrichtung 50 fährt in ihre ursprüngliche Parkposition am unteren Ende der Auflage 40 zurück. Die Speicherleuchtstoffplatte 3 wird von der Auflage 40 freigegeben, indem in die jeweiligen Ansaugdüsen 44 der einzelnen Segmente 42 Luft eingelassen oder eingepumpt wird.

Vor Beginn des Rücktransports werden die Abstandsleisten 41 wieder aus der Auflage 40 ausgefahren. Die Speicherleuchtstoffplatte 3 kann nun durch die Transporteinrichtung 15 wieder zurück in die Kassette 2 transportiert werden.

Auf ihrem Rücktransport wird etwaige restliche Röntgeninformation in der Speicherleuchtstoffplatte 3 mittels einer im Bereich unterhalb des Kassettenaufnahmeschachtes 4 angeordneten Löschlampe 19 gelöscht.

Zwischen der Auflage 40 und dem Kassettenaufnahmeschacht 4 sind Führungselemente vorgesehen, welche, insbesondere während des Rücktransports, für eine zuverlässige Führung der Speicherleuchtstoffplatte 3 sorgen. Die Speicherleuchtstoffplatte 3 liegt hierbei aufgrund ihres Eigengewichts an den Führungselementen auf, welche im dargestellten Beispiel als Führungskufen 17 und Führungsrollen 18 ausgebildet sind.

Wenn die Speicherleuchtstoffplatte 3 wieder vollständig in der Kassette 2 eingefahren ist, kann diese wieder mit dem bereits weiter oben beschriebenen Verriegelungsmechanismus in der Kassette arretiert werden. Die Greifarme 16 der Transporteinrichtung 15 geben nun die Speicherleuchtstoffplatte 3 frei, und die Transporteinrichtung 15 fährt in ihre Parkposition zurück. Die Kassette 2 wird nun durch ein Zuklappen der oben beschriebenen Klappe verschlossen, die Dichtlippen 13 (siehe Fig. 4) werden von den Breitseiten 14 der Kassette 2 zurückgefahren und das Fixierelement 20 gibt zusammen mit dem daran befindlichen Verschluss 21 die Kassette 2 frei, welche nun von einer Bedienperson wieder aus dem Kassettenaufnahmeschacht 4 entnommen werden kann.

Vorzugsweise ist eine - in den Figuren 1b und 2b nur stark schematisiert angedeutete - Kopplungseinrichtung 35 vorgesehen, welche den Kassettenaufnahmeschacht 4 mit der Auflage 40 während des Transports der Speicherleuchtstoffplatte 3 mechanisch koppeln (siehe Fig. 1 b) und während des Auslesens der Speicherleuchtstoffplatte 3 mechanisch entkoppeln kann. Die mechanische Entkopplung wird zur Vereinfachung durch die in Fig. 2b gepunktete Linie der Kopplungseinrichtung 35 symbolisiert.

Hierdurch wird einerseits ein besonders sicherer Transport der Speicherleuchtstoffplatte 3 aus der Kassette auf die Auflage 40 gewährleistet, da sich die im Kassettenaufnahmeschacht 4 befindliche Kassette 2 und die Auflage 40 aufgrund der mechanischen Kopplung nicht relativ zueinander bewegen können.

Durch die mechanische Entkopplung der im Gehäuse der Vorrichtung 1 beweglich, z.B. über elastische Elemente, aufgehängten Auflage 40 wird darüber hinaus erreicht, dass Schwingungen des Gehäuses, insbesondere aufgrund von äußeren Stößen oder Erschütterungen, nicht oder nur geringfügig auf die Auflage 40 übertragen werden können. Hierdurch wird ein besonders sicheres und zuverlässiges Auslesen der Speicherleuchtstoffplatte 3 gewährleistet.

In einer alternativen Ausgestaltung der in den Figuren 1 und 2 dargestellten Vorrichtung wird die Speicherleuchtstoffplatte 3 ausgelesen, während diese von der Transporteinrichtung 15 und 16 in einer gegen die Vertikale geneigten Transportebene transportiert wird. Hierbei ist die Ausleseeinrichtung 50 so angeordnet (nicht dargestellt), dass die Speicherleuchtstoffplatte 3 an der Ausleseeinrichtung 50 vorbei transportiert und dabei von dieser ausgelesen werden kann, während die Speicherleuchtstoffplatte 3 von der Kassette 2 weg nach unten oder zur Kassette 2 hin nach oben transportiert wird. Die Ausleseeinrichtung 50 kann z.B. in der Nähe der in den Figuren 1 und 2 eingezeichneten Löscheinrichtung 19 angeordnet sein, so dass die Speicherleuchtstoffplatte 3 bei ihrer Entnahme aus der Kassette 2 ausgelesen und bei ihrem Rücktransport in die Kassette 2 gelöscht werden kann.

In den Fig. 8a, 8b und 8c ist eine alternative Ausführungsform der erfindungsgemäßen Vorrichtung jeweils in Seitenansicht dargestellt. Die Fixierung der Kassette 2 im Kassettenaufnahmeschacht 4 sowie die Entnahme der Speicherleuchtstoffplatte 3 aus der Kassette 2 mittels Transporteinrichtung 15 erfolgen entsprechend den obigen Ausführungen im Zusammenhang mit den Fig. 1 bis 6.

Im Unterschied zu den oben beschriebenen Ausführungsbeispielen ist die Auflage 60, auf welcher sich die Speicherleuchtstoffplatte 3 während des Auslesens befindet, nicht ortsfest, sondern wird mittels einer geeigneten Antriebseinrichtung an der ortsfest angeordneten Ausleseeinrichtung 51 vorbei transportiert. Die Antriebseinrichtung umfasst in den dargestellten Beispielen einen Seil- oder Bandzug 61, welcher an der Auflage 60 befestigt ist, über eine Umlenkrolle 62 umgelenkt und von einer Antriebsrolle 63 angetrieben wird.

Zu dem in Fig. 8a dargestellten Zeitpunkt liegt die Speicherleuchtstoffplatte 3 eben auf der Auflage 60 auf, welche um einen Neigungswinkel α gegen die Vertikale geneigt ist. Um einen sicheren Halt und eine beim Auslesen besonders vorteilhafte hohe Planität der Speicherleuchtstoffplatte 3 auf der Auflage 60 zu gewährleisten, ist die Auflage 60 mit geeigneten Anziehungseinrichtungen, wie z. B. Ansaugdüsen (wie in Fig. 7) oder Saugnäpfen, oder Halteeinrichtungen versehen. Darüber hinaus ist die Transporteinrichtung 15, mit welcher die Speicherleuchtstoffplatte 3 aus der Kassette 2 entnommen und zur Auflage 60 transportiert wird, weiterhin mit der Speicherleuchtstoffplatte 3 in Eingriff, wodurch letztere zusätzlich gehalten wird.

Durch Rotation der Antriebsrolle 63 kann nun die Speicherleuchtstoffplatte 3 zusammen mit der Auflage 60 in Richtung S1 abgesenkt werden. Ein Zeitpunkt während des Absenkens ist in Fig. 8b dargestellt. Dabei wird die Speicherleuchtstoffplatte 3 in Richtung S1 an der ortsfest angeordneten Ausleseeinrichtung 51 vorbei bewegt und kann von dieser ausgelesen werden.

Bei der Ausleseeinrichtung 51 kann es sich, wie im Falle der Ausleseeinrichtung 50 (Figuren 1 und 2), um einen so genannten Zeilenscanner handeln. Vorzugsweise ist die Ausleseeinrichtung 51 als so genannter Flying Spot-Scanner ausgeführt, bei welchem ein über einen rotierenden Spiegel abgelenkter Laserstrahl die Speicherleuchtstoffplatte punktweise anregt und das jeweils angeregte Emissionslicht mittels eines Photomultipliers erfasst wird.

In einer alternativen Ausgestaltung kann das Auslesen der Speicherleuchtstoffplatte 3 erst auf dem Rückweg erfolgen, während diese in Richtung S2 an der Ausleseeinrichtung 51 vorbei bewegt wird (siehe Fig. 8c). Je nach Ausgestaltung der Antriebseinrichtung 61 bis 63, insbesondere des verwendeten Antriebs der Antriebsrolle 63, kann hierdurch ein besonders zuverlässiger und schwankungsarmer Transport der Speicherleuchtstoffplatte 3 an der Ausleseeinrichtung 51 vorbei erfolgen.

Unabhängig von der jeweiligen Bewegungsrichtung S1 bzw. S2 ist die Speicherleuchtstoffplatte 3 während des Auslesens um den Neigungswinkel α gegen die Vertikale geneigt.

Nach dem Auslesen ist die Speicherleuchtstoffplatte 3 wieder in der Fig. 8a dargestellten Position angekommen und kann - analog zu den Beispielen der Figuren 1 und 2 - wieder durch die Transporteinrichtung 15 in die Kassette 2 zurücktransportiert werden. Dabei wird etwaige Restinformation in der Speicherleuchtstoffplatte 3 durch Einschalten der Löschlampe 19 gelöscht.

Die in den Figuren 8a, 8b und 8c beschriebene Antriebseinrichtung kann auch durch andere geeignete Antriebseinrichtungen ersetzt werden. Beispielsweise kann die Auflage 60 von einem sog. Spindelantrieb (nicht dargestellt) in einer gegen die Vertikale geneigten Ebene bewegt werden. Hierbei wird die Auflage 60 von einer oder mehreren von einem Motor angetriebenen rotierenden Wellen oder Spindeln, die parallel zur Auflage 60 angeordnet sind, in Bewegung versetzt.

## Patentansprüche

1. Vorrichtung zum Auslesen von in einer Speicherleuchtstoffplatte (3) gespeicherten Röntgeninformationen, umfassend
. eine Einrichtung (15 -18, 40, 41, 60 - 63) zum Halten und/oder Transportieren der Speicherleuchtstoffplatte (3) in einer um einen geringfügigen Neigungswinkel (α), vorzugsweise zwischen etwa 3° und 15°, gegen die Vertikale geneigten Orientierung, in welcher die Speicherleuchtstoffplatte (3) eine ebene Form aufweist, und
. eine Ausleseeinrichtung (50, 51) zum Auslesen der um den Neigungswinkel (α) gegen die Vertikale geneigten, ebenen Speicherleuchtstoffplatte (3),
wobei die Einrichtung (15 - 18, 40, 41, 60 - 63) zum Halten und/oder Transportieren der Speicherteuchtstoffplatte (3) eine gegen die Vertikale geneigte ebene Auflage (40, 60) umfasst, auf welcher die Speicherleuchtstoffplatte (3), insbesondere während des Auslesens und/oder beim Transport, aufliegen kann,
**dadurch gekennzeichnet, dass**
die Auflage (40, 60) mehrere Segmente (42) aufweist, durch welche die auf der Auflage (40, 60) befindliche Speicherleuchtstoffplatte (3) an die Auflage (40, 60) gezogen werden kann, wobei die Anziehungswirkung der Segmente (42) einzeln ansteuerbar ist, so dass eine an das jeweilige Format der SpeicherleuchtstoNptatte (3) adaptierte Anziehung an die Auflage (40, 60) realisiert wird.

2. Vorrichtung nach Anspruch 1, **dadurch gekennzeichnet, dass** die Einrichtung (15-18, 40, 41, 60 - 63) zum Halten und/oder Transportieren der Speicherlsuchtstoffplatte (3) ein oder mehrere Auflageelemente (17, 18, 41) umfasst, welche derart angeordnet sind, dass die gegen die Vertikale geneigte Speicherleuchtstoffplatte (3) aufgrund ihres Eigengewichts auf den Auflageelementen (17, 18, 41) aufliegen kann.

3. Vorrichtung nach einem der vorangehenden Ansprüche, **gekennzeichnet durch** eine erste Antriebseinrichtung, welche die Ausleseeinrichtung (50) während des Auslesens relativ zu der gegen die Vertikale geneigten Speicherleuchtstoffplatte (3), welche insbesondere auf der Auflage (40) liegt, bewegt.

4. Vorrichtung nach einem der Ansprüche 1 oder 2, **gekennzeichnet durch** eine zweite Antriebseinrichtung (61. 62, 63), welche die gegen die Vertikale geneigte Speicherleuchtstoffplatte (3), insbesondere zusammen mit der Auflage (60), während des Auslesens relativ zu der Ausleseeinrichtung (51) bewegt.

5. Vorrichtung nach einem der vorangehenden Ansprüche, **gekennzeichnet durch** eine Eingabeeinrichtung (4), in welche eine Kassette (2), in der sich die Speicherleuchtstoffplatte (3) befindet, eingegeben werden kann, wobei die Eingabeeinrichtung (4) derart ausgestaltet ist, dass die eingegebene Kassette (2) und/oder die in der Kassette (2) befindliche Speicherleuchtstoffplatte (3) gegen die Vertikale geneigt ist.

6. Vorrichtung nach einem der vorangehenden Ansprüche, **gekennzeichnet durch** eine Transporteinrichtung (15, 16) zur Entnahme der Speicherleuchtstoffplatte (3) aus der eingegebenen Kassette (3) in einer gegen die Vertikale geneigten Transportebene.

7. Vorrichtung nach einem der vorangehenden Ansprüche, **dadurch gekennzeichnet, dass** der Neigungswinkel (α) der Speicherleuchtstoffplatte (3) und/oder der Auflage (40, 60) und/oder der Transportebene und/oder der eingegebenen Kassette (2) bzw. der in der Kassette (2) befindlichen Speicherleuchtstoffpiatte (3) gegen die Vertikale einen Wert zwischen 3° und 15° aufweist.

8. Verfahren zum Auslesen von in einer Speicherleuchtstoffplatte (3) gespeicherten Röntgeninformationen, bei welchem die Speicherleuchtstoffglatte (3) ausgelesen wird, während sie um einen geringfügigen Neigungswinkel (α), vorzugsweise zwischen etwa 3°und 15°, gegen die Vertikale geneigt ist und eine ebene Form aufweist und auf einer gegen die Vertikale geneigten ebenen Auflage (40, 60) aufliegt,
**dadurch gekennzeichnet, dass**
die auf der Auflage (40, 60) befindliche Speicherleuchtstoffplatte (3) an die Auflage (40, 60) gezogen wird, indem die Anziehungswirkung von Segmenten (42) der Auflage (40, 60) einzeln angesteuert wird, so dass eine an das jeweilige Format der Speicherleuchtstoffplatte (3) adaptierte Anziehung an die Auflage (40, 60) realisiert wird.

9. Verfahren nach Anspruch 8, **dadurch gekennzeichnet, dass** die Ausleseeinrichtung (50) während des Auslesens relativ zu der gegen die Vertikale geneigten Speicherleuchtstoffplatte (3) bewegt wird.

10. Verfahren nach Anspruch 8, **dadurch gekennzeichnet, dass** die gegen die Vertikale geneigte Speicherleuchtstoffplatte (3), insbesondere zusammen mit der Auflage (60), während des Auslesens relativ zu der Ausleseeinrichtung (51) bewegt wird.

11. Verfahren nach einem der Ansprüche 8 bis 10, **dadurch gekennzeichnet, dass** die Speicherteuchtstoffpiatte (3) bei ihrer Entnahme aus einer Kassette (2) in einer gegen die Vertikale geneigten Transportebene transportiert wird.

## Claims

1. An apparatus for reading out X-ray information stored in a storage phosphor plate (3), comprising
- a device (15 - 18, 40, 41, 60 - 63) for holding and/or conveying the storage phosphor plate (3) in an orientation inclined in relation to the vertical by a slight angle of inclination (α), preferably between approximately 3° and 15°, in which the storage phosphor plate (3) is level in form, and
- a read-out device (50, 51) for reading out the level storage phosphor plate (3), inclined in relation to the vertical by the angle of inclination (α),
the device (15 - 18, 40, 41, 60 - 63) for holding and/or conveying the storage phosphor plate (3) comprising a level support (40, 60), inclined in relation to the vertical, on which the storage phosphor plate (3) can rest, in particular during read-out and/or upon conveyance,
**characterised in that**
the support (40, 60) has a number of segments (42) by means of which the storage phosphor plate (3) located on the support (40, 60) can be pulled towards the support (40, 60), the attraction effect of the segments (42) being individually controllable so that an attraction to the support (40, 60) adapted to the respective format of the storage phosphor plate (3) is produced.

2. The apparatus according to Claim 1, **characterised in that** the device (15 -18, 40, 41, 60 - 63) for holding and/or conveying the storage phosphor plate (3) comprises one or more support elements (17, 18, 41) which are arranged such that the storage phosphor plate (3) inclined in relation to the vertical can rest on the support elements (17, 18, 41) due to its own weight.

3. The apparatus according to any of the preceding claims, **characterised by** a first drive device which during read-out moves the read-out device (50) relative to the storage phosphor plate (3) inclined in relation to the vertical and which in particular rests on the support (40).

4. The apparatus according to either of Claims 1 or 2, **characterised by** a second drive device (61, 62, 63) which during read-out moves the storage phosphor plate (3) inclined in relation to the vertical, in particular together with the support (60), relative to the read-out device (51).

5. The apparatus according to any of the preceding claims, **characterised by** an input device (4) into which a cassette (2) in which the storage phosphor plate (3) is located can be inputted, the input device (4) being designed such that the input cassette (2) and/or the storage phosphor plate (3) located within the cassette (2) is inclined in relation to the vertical.

6. The apparatus according to any of the preceding claims, **characterised by** a conveyance device (15, 16) for removing the storage phosphor plate (30) from the input cassette (3) in a conveyance plane inclined in relation to the vertical.

7. The apparatus according to any of the preceding claims, **characterised in that** the angle of inclination (α) of the storage phosphor plate (3) and/or of the support (40, 60) and/or of the conveyance plane and/or of the input cassette (2) or of the storage phosphor plate (3) located within the cassette (2) in relation to the vertical has a value of between 3° and 15°.

8. A method for reading out X-ray information stored in a storage
phosphor plate (3) with which the storage phosphor plate (3) is read out while it is inclined in relation to the vertical by a slight angle of inclination (α), preferably between approximately 3° and 15°, and is level in form and rests on a level support (40, 60) inclined in relation to the vertical,
**characterised in that**
the storage phosphor plate (3) located on the support (40, 60) is pulled towards the support (40, 60), the attraction effect of segments (42) of the support (40, 60) being controlled individually so that an attraction to the support (40, 50) adapted to the respective format of the storage phosphor plate (3) is produced.

9. The method according to Claim 8, **characterised in that** during read-out the read-out device (50) is moved relative to the storage phosphor plate (3) inclined in relation to the vertical.

10. The method according to Claim 8, **characterised in that** during read-out the storage phosphor plate (3) inclined in relation to the vertical is moved, in particular together with the support (60), relative to the read-out unit (51).

11. The method according to any of Claims 8 to 10, **characterised in that** upon removal from a cassette (2) the storage phosphor plate (3) is conveyed in a conveyance plane inclined in relation to the vertical.

## Revendications

1. Dispositif pour la lecture d'informations radiographiques stockées dans une plaque luminescente à mémoire (3), comprenant
- un dispositif (15 - 18, 40, 41, 60 - 63) pour retenir et/ou transporter la plaque luminescente à mémoire (3) dans une orientation inclinée par rapport à la verticale suivant un angle d'inclinaison léger (α), compris de préférence entre environ 3° et 15°, dans laquelle la plaque luminescente à mémoire (3) présente une forme plane, et
- un dispositif de lecture (50, 51) pour la lecture de la plaque luminescente à mémoire (3) plane et inclinée par rapport à la verticale suivant l'angle d'inclinaison (α), le dispositif (15 - 18, 40, 41, 60 - 63) pour retenir et/ou transporter la plaque luminescente à mémoire (3) comprenant une surface d'appui (40, 60) plane et inclinée par rapport à la verticale, sur laquelle la plaque luminescente à mémoire (3) peut reposer, notamment lors de sa lecture et/ou de son transport,
**caractérisé en ce que**
la surface d'appui (40, 60) présente plusieurs segments (42) permettant à la plaque luminescente à mémoire (3) reposant sur la surface d'appui (40, 60) d'être attirée sur cette surface d'appui (40, 60), la puissance d'attraction des segments (42) pouvant être commandée individuellement de sorte à créer sur la surface d'appui (40, 60) une attraction adaptée au format respectif de la plaque luminescente à mémoire (3).

2. Dispositif selon la revendication 1, **caractérisé en ce que** le dispositif (15 - 18, 40, 41, 60 - 63) pour retenir et/ou transporter la plaque luminescente à mémoire (3) comprend un ou plusieurs éléments de surface d'appui (17, 18, 41) qui sont agencés de sorte que la plaque luminescente à mémoire (3) inclinée par rapport à la verticale puisse reposer sur les éléments de surface d'appui (17, 18, 41) du fait de son poids propre.

3. Dispositif selon l'une des revendications précédentes, **caractérisé par** un premier dispositif d'entraînement qui déplace le dispositif de lecture (50) lors de la lecture par rapport à la plaque luminescente à mémoire (3) inclinée par rapport à la verticale et reposant notamment sur la surface d'appui (40).

4. Dispositif selon l'une des revendications 1 ou 2, **caractérisé par** un deuxième dispositif d'entraînement (61, 62, 63) qui déplace, lors de la lecture, la plaque luminescente à mémoire (3) inclinée par rapport à la verticale, notamment conjointement avec la surface d'appui (60), par rapport au dispositif de lecture (51).

5. Dispositif selon l'une des revendications précédentes, **caractérisé par** un dispositif d'introduction (4) dans lequel une cassette (2) renfermant la plaque luminescente à mémoire (3) peut être introduite, le dispositif d'introduction (4) étant agencé de telle sorte que la cassette (2) introduite et/ou la plaque luminescente à mémoire (3) contenue dans la cassette (2) soient inclinées par rapport à la verticale.

6. Dispositif selon l'une des revendications précédentes, **caractérisé par** un dispositif de transport (15, 16) destiné à prélever, dans un plan de transport incliné par rapport à la verticale, la plaque luminescente à mémoire (3) hors de la cassette (2) introduite.

7. Dispositif selon l'une des revendications précédentes, **caractérisé en ce que** l'angle d'inclinaison (α) de la plaque luminescente à mémoire (3) et/ou de la surface d'appui (40, 60) et/ou du plan de transport et/ou de la cassette introduite (2) ou bien de la plaque luminescente à mémoire (3) contenue dans la cassette (2) présente une valeur comprise entre 3° et 15° par rapport à la verticale.

8. Procédé pour la lecture d'informations radiographiques stockées dans une plaque luminescente à mémoire (3), dans lequel la plaque luminescente à mémoire (3) est lue alors qu'elle est inclinée par rapport à la verticale suivant un léger angle d'inclinaison (α) compris de préférence entre environ 3° et 15°, celle-ci présentant une forme plane et reposant sur une surface d'appui (40, 60) plane inclinée par rapport à la verticale,
**caractérisé en ce que**
la plaque luminescente à mémoire (3) présente sur la surface d'appui (40, 60) est attirée sur cette surface d'appui (40, 60) grâce au fait que la puissance d'attraction des segments (42) de la surface d'appui (40, 60) puisse être commandée de manière individuelle, de sorte qu'une attraction adaptée au format respectif de la plaque luminescente à mémoire (3) puisse être créée sur la surface d'appui (40, 60).

9. Procédé selon la revendication 8, **caractérisé en ce que** le dispositif de lecture (50) est déplacé lors de la lecture par rapport à la plaque luminescente à mémoire (3) inclinée par rapport à la verticale.

10. Procédé selon la revendication 8, **caractérisé en ce que** la plaque luminescente à mémoire (3) inclinée par rapport à la verticale est déplacée lors de la lecture, notamment conjointement à une surface d'appui (60), par rapport au dispositif de lecture (51).

11. Procédé selon l'une des revendications 8 à 10, **caractérisé en ce que** la plaque luminescente à mémoire (3) est transportée, lors de son prélèvement hors d'une cassette (2), dans un plan de transport incliné par rapport à la verticale.
